# EUROPEAN PATENT APPLICATION

(11) **EP 4 603 369 A1**
(43) Date of publication of application: **20.08.2025**
(21) Application number: 24157869.9
(22) Date of filing: 15.02.2024
(51) Int. Cl.: B62D 25/04, B60R 21/34, B60R 21/38

(54) **FRONT PILLAR ASSEMBLY FOR A VEHICLE, PROTECTION SYSTEM, METHOD FOR OPERATING A FRONT PILLAR ASSEMBLY, USE, AND VEHICLE**

(71) Applicant: Volvo Car Corporation, 405 31 Göteborg (SE)
(72) Inventor: TONBRING, Miriam, 40531 Göteborg (SE); FREDRIKSSON, Anders, 40531 Göteborg (SE)
(74) Representative: Maiwald GmbH

(57) **Abstract**

The disclosure relates to a front pillar assembly (32) for a vehicle. The front pillar assembly (32) comprises a front pillar base (34) having a first end (38) connectable to a roof section of a vehicle body and a second end (40) connectable to a front section of the vehicle body. Further, the front pillar assembly (32) comprises a protection element (36) configured to alleviate a road user impact on the front pillar assembly (32). The protection element (36) is rotatably supported on the front pillar base (34) at a hinge point (46) such that the protection element (36) may assume a first angular position (44) in which the protection element (36) substantially extends along an outer contour (42) of the front pillar base (34) and a second angular position (58) in which the protection element (36) extends away from the front pillar base (34). The hinge point (46) is arranged closer to the second end (40) than to the first end (38). Additionally, a protection system (18) is described. Furthermore, a method for operating a protection element (36) of a front pillar assembly (32), a use, and a vehicle are presented.

## Description

### TECHNICAL FIELD

The present disclosure relates to a front pillar assembly for a vehicle.

Moreover, the present disclosure is directed to a protection system for alleviating an impact of a road user on a vehicle.

Additionally, the present disclosure relates to a method for operating a front pillar assembly.

Furthermore, the present disclosure is directed to a use of a portion of a front lid.

Also, the present disclosure relates to a vehicle comprising a protection system.

### BACKGROUND ART

Nowadays, vehicles usually comprise several systems for reducing an injury level of passengers in the vehicle, particularly in case of collisions or accidents. Examples of such systems include seat belts and airbags. However, the safety of other road users that may collide with the vehicle in case of an accident is also important. This especially applies to so-called vulnerable road users such as pedestrians or cyclists.

### SUMMARY

It is therefore an objective of the present disclosure to further improve the protection of other road users during a collision with a vehicle. In other words an impact of such a road user resulting from the collision shall be alleviated.

The problem is at least partially solved or alleviated by the subject matter of the independent claims of the present disclosure, wherein further examples are incorporated in the dependent claims.

According to a first aspect, there is provided a front pillar assembly for a vehicle. The front pillar assembly comprises a front pillar base having a first end connectable to a roof SE:TOP section of a vehicle body and a second end connectable to a front section of the vehicle body. The front pillar assembly further comprises a protection element configured to alleviate a road user impact on the front pillar assembly. The protection element is rotatably supported on the front pillar base at a hinge point such that the protection element may assume a first angular position relative to the front pillar base in which the protection element substantially extends along an outer contour of the front pillar base and a second angular position relative to the front pillar base in which the protection element extends away from the front pillar base. The hinge point is arranged closer to the second end of the front pillar base than to the first end of the front pillar base. The front pillar assembly may be understood as a part of a vehicle body that fulfils a structural function. The front pillar assembly may be arranged on either side of a windshield. Further, the front pillar assembly may extend from a roof section of the vehicle body to a front section of the vehicle body. To this end, a first mechanical connection interface configured to connect the front pillar assembly to the roof section may be provided adjacent to the first end of the front pillar assembly. A second mechanical connection interface configured to connect the front pillar assembly to the front section of the vehicle may be provided adjacent to the second end of the front pillar assembly. The front section of the vehicle may comprise a motor compartment or a front storage compartment. In other words, the front pillar assembly may form an a-pillar. In this context, the front pillar base may form the structural part of the front pillar assembly. The protection element may be understood as a paneling element covering the front pillar base. In other words, the protection element may be a cover element that is incorporated in the car paneling. The road user may be a pedestrian, a cyclist, or any other road user who collides with the vehicle. The first angular position corresponds to a position, in which the protection element may form the paneling element for covering the front pillar base. In other words, the first angular position may be a retracted position. In contrast hereto, the second angular position corresponds to a position, in which the protection element may not extend along the outer contour of the front pillar base. In other words, the second angular position may be in an activated or in an extended position, in which the protection element extends away from the front pillar base. The hinge point being arranged closer to the second end of the front pillar base than to the first end of the front pillar base has the effect that the protection element may be rotated in a way that one end of the protection element may be moved further away from the front pillar base than the other end of the protection element. This has the effect that a space between the front pillar base and the one end of the protection element may be larger than a space between the front pillar base and the other end of the protection element. The space between the front pillar base and the one end of the protection element substantially leads to the alleviation of a road user impact on the vehicle since it may be used for reducing a relative speed occurring between the road user and the vehicle. This means that such alleviation of the impact of the road user on the vehicle improves the protection of road users during an impact of the road user with a front pillar of a vehicle. Moreover, the front pillar assembly according to the present disclosure is structurally simple and robust.

In an example, the protection element has a first end and a second end, wherein the first end and the second end are arranged opposite to one another. In this context, the hinge point is arranged closer to the second end of the protection element than to the first end of the protection element.

According to an example, the protection element further comprises an actuation interface arranged closer to the second end of the front pillar base than to the first end of the front pillar base, wherein the actuation interface is configured to receive a mechanical force for rotating the protection element. Moreover, the actuation interface is arranged closer to the second end of the protection element than to the first end of the protection element. The actuation interface may be made of the same or a different material as compared to the rest of the protection element. In any case, the actuation interface forms a well-defined interface for receiving the mechanical force for actuating the protection element. Moreover, the actuation interface is configured to reliably cause the protection element to move from the first angular position into the second angular position. The fact that the actuation interface is arranged closer to the second end of the front pillar base and/or the second end of the protection element than to the first end of the front pillar base and/or the first end of the protection element has the effect that a comparatively small movement or displacement of the actuation interface may lead to a comparatively large movement or displacement of the first end, thereby creating a comparatively large space between the protection element and the front pillar base. Thus, the road user impact may be alleviated in a reliable and efficient manner.

According to an example, the protection element comprises a protection portion and an actuation portion, wherein the protection portion and the actuation portion are arranged on opposite sides of the hinge point and wherein the protection portion is arranged closer to the first end of the front pillar base than the actuation portion. The protection portion may be configured to receive a mechanical force originating from the road user who collides with the vehicle. In other words, the protection portion may be used to alleviate the impact of the road user on the vehicle. The protection portion and the actuation portion being arranged at different sides of the hinge point has the effect that the protection portion and the actuation portion, may be configured differently from each other. In other words, the properties of the protection portion and the actuation portion may differ from each other. This allows to specifically adapt the protection portion and the actuation portion to their respective functionalities. The protection portion and the actuation portion may be made of the same or a different material. Moreover, the protection portion being arranged closer to the first end of the front pillar base than the actuation portion has the effect that the protection portion may be bigger in size than the actuation portion. Consequently, the protection portion may extend along the entire length of the front pillar base. Thus, the alleviation of the impact of the road user on the vehicle may be further increased.

According to an example, the protection portion is elongated. Additionally or alternatively, the actuation portion is elongated. Additionally or alternatively, the protection portion is at least three times longer than the actuation portion. The fact that the protection portion is elongated and/or longer than the actuation portion has the effect that an impact of the road user may be alleviated over a comparatively large space, e.g. over an entire extension of the front pillar assembly or the a-pillar. The elongated form of the protection portion has the additional effect that the protection portion may be stored in the first angular position in a space-saving manner. If the actuation portion is elongated, it requires a comparatively small space, i.e. also the actuation portion may be space-saving. If the actuation portion is shorter than the protection portion, the front pillar assembly may be designated as space-efficient since the portion actually configured to alleviate the road user impact may use more space than the actuation portion. Thus, the front pillar assembly may be built in a compact and size-efficient manner.

According to an example, the actuation interface is arranged in the actuation portion. This renders the front pillar assembly compact.

According to an example, an angular difference between the first angular position and the second angular position is 60° or less. In other words, the second angular position of the protection element is limited by the angular difference of 60° or less. According to an example, the angular difference between the first angular position and the second angular position is 40° or less. This has the effect that the road user impact on the vehicle may be effectively and efficiently alleviated. Moreover, limiting the angular difference has the effect that a lateral impact of the road user on the protection element is ensured. This reduces the potential for injuries of the road user.

According to a second aspect, there is provided a protection system for alleviating an impact of a road user on a vehicle. The protection system comprises a front pillar assembly according to the present disclosure and an actuation means. The actuation means is drivingly coupled to the protection element such that the protection element may be selectively caused to assume the second angular position using the actuation means. The actuation means may be understood as a part or a unit, which is configured to generate a mechanical force acting on the front pillar assembly, more precisely on the protection element thereof. In other words, the actuation means is capable of rotating the protection element from the first angular position into the second angular position. This has the effect that the alleviation of the impact of the road user on the vehicle may be provided in a reliable and quick manner.

According to an example, the protection system further comprises a front lid, wherein the actuation means comprises a portion of the front lid. The front lid may be understood as a bonnet covering a front body part of the vehicle, e.g. comprising a motor or a storage compartment. In other words, the front lid may be a hood of the vehicle. The front lid may form part of the front section of the vehicle. The front lid may be rotatably supported on a structural front part of the vehicle. The actuation means comprising a portion of the front lid has the effect that the front lid may be used to rotate the protection element. Therefore, no additional and complex components are necessary to rotate the protection element. Moreover, a movement of the front lid and an actuation of the front pillar assembly is time coordinated in a simple and reliable manner.

According to an example, the protection system further comprises a front lid actuator drivingly coupled to the front lid and configured to move the front lid from a retracted position into an elevated position for alleviating a road user impact on the front lid. The front lid actuator may be a unit or assembly that is configured to generate a mechanical force to move the front lid from the retracted position into the elevated position. In the elevated position, the front lid is lifted with respect to the retracted positon. Thus, the road user impact on the front lid may be alleviated due to the fact that an enlarged space is rendered available between the front lid in its elevated position and the remaining components of the vehicle. This enlarged space may be used in order to reduce a relative speed between the road user and the remaining components of the vehicle. This has the effect that the road safety of the road user may be further increased.

According to an example, the actuation means drivingly coupled to the protection element comprises the front lid actuator. Therefore, the protection element may be actuated using the front lid actuator via the front lid. In other words, the protection element may assume the second angular position initiated by the front lid actuator. This has the effect that the alleviated road user impact on the front lid and the alleviated road user impact on the front pillar assembly may be time coordinated and, consequently, combined. Thus, the road safety of the road user may be further increased. Moreover, such a protection system is structurally simple since only one actuation unit, i.e. the front lid actuator, is necessary in order to actuate both the front lid and the front pillar assembly.

According to an example, a portion of the protection element is located under the front lid. The protection element being located under the front lid is the case when the vehicle is in a normal operational state. In other words, this may be the case when the vehicle moves on the road without an accident happening. This has the effect that a portion of the protection element may be visually hidden under the front lid. This especially applies to the actuation portion and the actuation interface of the protection element. Thus, these components may be visually hidden under the front lid. Consequently, all components of the front pillar assembly and the front lid being necessary for kinematically coupling the front pillar assembly and the front lid are located under the front lid. In this position, these components are protected from undesired environmental influences. This enhances the reliability of the kinematic coupling. In other words, only the protection portion is located above the front lid such that the protection portion is read for alleviating a road user impact. Thus, the road safety of the road user may be further increased.

In an example, the actuation means comprises a pyrotechnic unit. The pyrotechnic unit may be used as the front lid actuator. In other words, the pyrotechnic unit may cause the front lid to move such that the front lid causes the protection element to assume the second angular position. Pyrotechnic actuators are particularly suitable for providing a comparatively high actuation force within a comparatively short time span. Thus, using such an actuator allows to quickly and reliably move the front lid into the elevated position and the protection element into the extended position.

According to a third aspect, there is provided a method for operating a front pillar assembly. The method comprises:
- causing a front lid to move from a retracted position into an elevated position, and
- causing a protection element of the front pillar assembly to move from a first angular position relative to a front pillar base in which the protection element substantially extends along an outer contour of the front pillar base into a second angular position relative to the front pillar base in which the protection element extends away from the front pillar base using a portion of the front lid.

Thus, when executing the method, the front lid may be moved from the retracted position into the elevated position using a front lid actuator. A portion of the front lid may be used as an actuation means that causes the protection element of the front pillar assembly to move into an angular position in which the protection element extends away from the front pillar base. This method allows operating the protection element of the front pillar assembly using relatively few parts or elements. Further, the method allows to time coordinate the use of a front lid and a front protection element to alleviate the impact of a road user on a vehicle. This increases the safety of the road user in case of a collision with a vehicle comprising a front pillar assembly and a front lid.

According to a fourth aspect, there is provided a use of a portion of a front lid as an actuation means for a protection element of a front pillar assembly. The front lid being used as the actuation means for the protection element may reduce the amount of units or parts necessary to actuate the movement of the protection element. In other words, without the front lid being used as the actuation means, other components would be needed to actuate the movement of the protection element. Since most of the vehicles comprise a front lid, less components are needed. This has the effect that the vehicle may not necessarily be equipped with additional and/or more complex actuation means. Further, such a use of the front lid may allow to build more compact vehicles with increased road safety systems with less complex components. Thus, such a use may be cost-efficient.

According to a fifth aspect, there is provided a vehicle comprising a protection system according to the present disclosure. This has the effect that the vehicle may not necessarily be equipped with additional and/or more complex actuation means. Further, the road safety of the road user may be increased. Moreover, such a vehicle may be built in a cost-efficient manner.

It should be noted that the above examples may be combined with each other irrespective of the aspect involved. Accordingly, the method may be combined with structural features and, likewise, the apparatus and the system may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle according to the present disclosure comprising a protection system according to the present disclosure and a front pillar assembly according to the present disclosure, wherein the front pillar assembly may be operated using a method according to the present disclosure,
- Figure 2: shows a schematic representation of the protection system of the vehicle of Figure 1, wherein a protection element is in a first angular position,
- Figure 3: shows a schematic representation of the protection system of the vehicle of Figure 1 in a view corresponding to the view of Figure 2, wherein the protection element is in a second angular position, and
- Figure 4: illustrates steps of the method according to the present disclosure for operating a front pillar assembly.

### DETAILED DESCRIPTION

The Figures are merely schematic representations and serve only to illustrate examples of the disclosure. Identical or equivalent elements are in principle provided with the same reference signs.

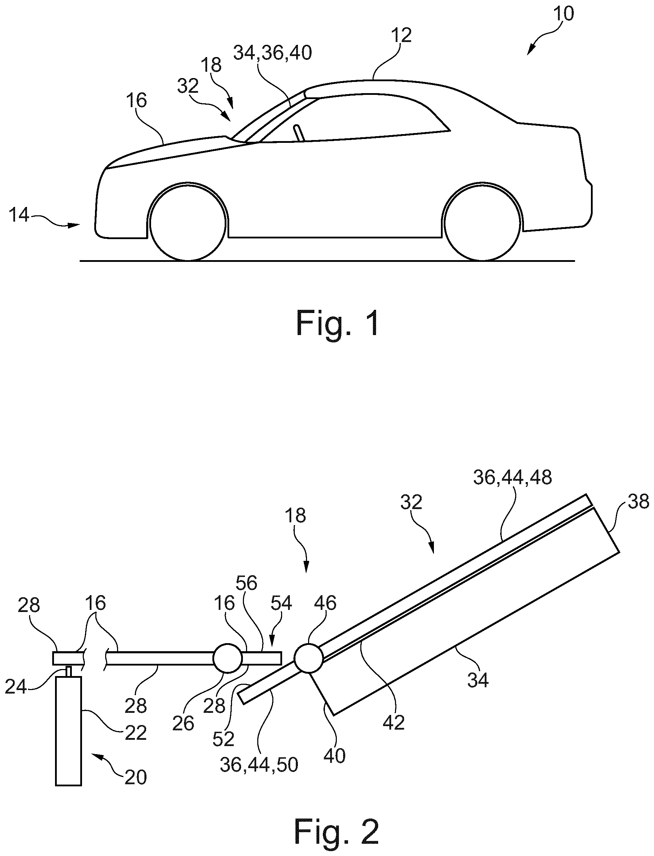

Figure 1 shows a vehicle 10. The vehicle 10 comprises a vehicle body with a roof section 12 and a front section 14. Moreover, the vehicle 10 comprises a front lid 16 forming part of the front section 14.

Additionally, the vehicle 10 is equipped with a protection system 18.

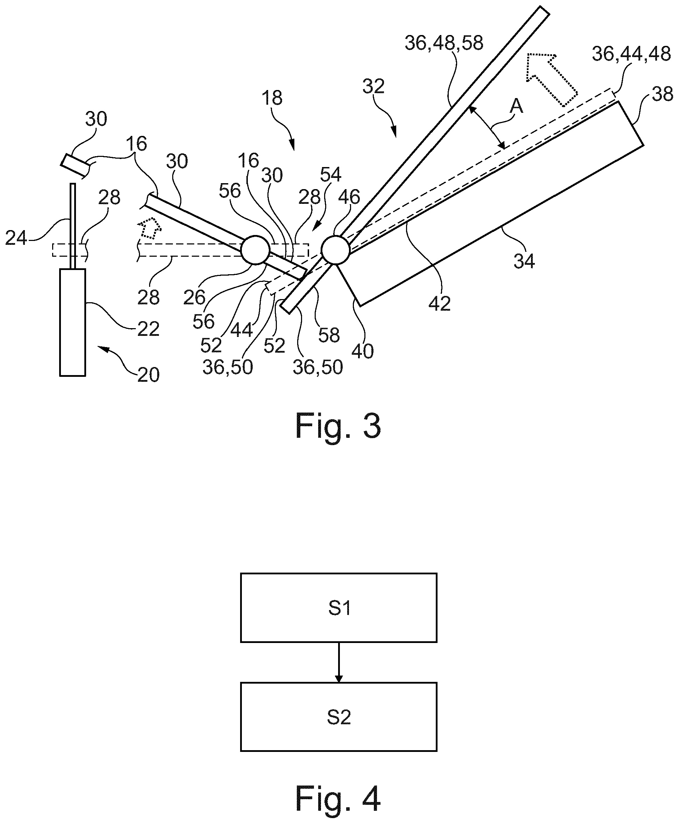

The protection system 18, the front lid 16 and further components of the vehicle 10 coupled thereto are shown in more detail in Figures 2 and 3.

The vehicle 10 further comprises a front lid actuator 20.

In the present example, the front lid actuator 20 is a pyrotechnic unit 22 that is configured to move an actuation rod 24.

As may best be seen from Figure 2, the front lid 16 is rotatably supported on a hinge point 26. The front lid actuator 20 is drivingly coupled to the front lid 16 such that the front lid 16 can be moved from a retracted position 28 into an elevated position 30. The retracted position 28 is shown in Figure 2. In this position, the front lid 16 closes a motor compartment or luggage compartment provided in the front section 14 of the vehicle 10.

The elevated position 30 is shown in Figure 3. In the elevated position, the front lid 16 is lifted with respect to the retracted position 28 in that the front lid 16 is rotated around hinge point 26 using the front lid actuator 20.

The protection system 18 comprises a front pillar assembly 32. The front pillar assembly 32 comprises a front pillar base 34 and a protection element 36.

The front pillar base 34 has a first end 38 and a second end 40. The first end 38 is mechanically connected to the roof section 12 of the vehicle 10. The second end 40 is mechanically connected to the front section 14 of the vehicle 10.

The protection element 36 is configured to alleviate a road user impact on the front pillar assembly 32.

In Figure 2, the protection element 36 substantially extends along an outer contour 42 of the front pillar base 34 in a first angular position 44. In other words, the first angular position 44 is defined relative to the front pillar base 34.

The protection element 36 is rotatably supported on the front pillar base 34 at a hinge point 46. The hinge point 46 is located closer to the second end 40 of the front pillar base 34 than to the first end 38 of the front pillar base 34.

In the example shown in the Figures, the hinge point 46 is arranged directly adjacent to the second end 40.

The protection element 36 comprises a protection portion 48 and an actuation portion 50.

The protection portion 48 and the actuation portion 50 are elongated and the protection portion 48 is approximately four times longer than the actuation portion 50.

The protection portion 48 and the actuation portion 50 are arranged on opposite sides of the hinge point 46.

Figure 2 shows that the protection portion 48 is arranged closer to the first end 38 of the front pillar base 34 than the actuation portion 50.

Thus, since in the present example the hinge point 46 is arranged directly adjacent to the second end 40, the protection portion 48 and the actuation portion 50 also extend on opposite sides of the second end 40.

The protection element 36 further comprises an actuation interface 52. The actuation interface 52 is configured to receive a mechanical force for rotating the protection element 36 around the hinge point 46. The actuation interface 52 is arranged closer to the second end 40 of the front pillar base 34 than to the first end 38 of the front pillar base 34. In the example shown in the Figures, the actuation interface 52 and the protection portion 48 are arranged on opposite sides of the second end 40 and the hinge point 46.

In the present example, the actuation interface 52 is arranged in the activation portion, which is located under the front lid 16.

The protection system 18 further comprising an actuation means 54. In the present example, the actuation means 54 is a portion 56 of the front lid 16 that is drivingly coupled to the actuation portion 50 of the protection element 36. Furthermore, the actuation means 54 comprises the front lid actuator 20.

As may be seen from the combination of Figure 2 and Figure 3, when the front lid 16 is in the retracted position 28, the protection element 36 is in the first angular position 44. When the front lid 16 is in the elevated position 30, the protection element 36 is in a second angular position 58. Similar to the first angular position 44, also the second angular position 58 is defined relative to the front pillar base 34.

In the present example, an angular difference A between the first angular position 44 and the second angular position 58 is 30°.

In the following, a method for operating the front pillar assembly 32 will be explained in more detail in connection with Figure 4.

In a first step S 1 of the method, the front lid 16 is caused to move from the retracted position 28 into the elevated position 30.

In the present example, the front lid actuator 20 causes the front lid 16 to move. Thus, the front lid 16 rotates around the hinge point 26 and, thus, moves from the retracted position 28 into the elevated position 30.

In a second step S2, the protection element 36 is caused to move from the first angular position 44 into the second angular position 58.

In more detail, the movement of the front lid 16 causes in the present example the protection element 36 to rotate from the first angular position 44 into the second angular position 58. This is due to the interaction of the portion 56 of the front lid 16 exercising a force on the actuation interface 52 of the protection element 36.

In other words, when moving the front lid 16 into the elevated position 30, the portion 56 of the front lid 16 is used as the actuation means 54 such that the protection element 36 is selectively caused to assume the second angular position 58.

As used herein, the phrase "at least one" in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: roof section
- 14: front section
- 16: front lid
- 18: protection system
- 20: front lid actuator
- 22: pyrotechnic unit
- 24: actuation rod
- 26: hinge point
- 28: retracted position
- 30: elevated position
- 32: front pillar assembly
- 34: front pillar base
- 36: protection element
- 38: first end
- 40: second end
- 42: outer contour
- 44: first angular position
- 46: hinge point
- 48: protection portion
- 50: actuation portion
- 52: actuation interface
- 54: actuation means
- 56: portion
- 58: second angular position
- A: angular difference
- S1: first step
- S2: second step

## Claims

1. A front pillar assembly (32) for a vehicle (10), comprising
a front pillar base (34) having a first end (38) connectable to a roof section (12) of a vehicle body and a second end (40) connectable to a front section (14) of the vehicle body, and
a protection element (36) configured to alleviate a road user impact on the front pillar assembly (32),
wherein the protection element (36) is rotatably supported on the front pillar base (34) at a hinge point (46) such that the protection element (36) may assume a first angular position (44) relative to the front pillar base (34) in which the protection element (36) substantially extends along an outer contour (42) of the front pillar base (34) and a second angular position (58) relative to the front pillar base (34) in which the protection element (36) extends away from the front pillar base (34), and
wherein the hinge point (46) is arranged closer to the second end (40) of the front pillar base (34) than to the first end (38) of the front pillar base (34).

2. The front pillar assembly (32) of claim 1, wherein the protection element (36) further comprises an actuation interface (52) arranged closer to the second end (40) of the front pillar base (34) than to the first end (38) of the front pillar base (34), wherein the actuation interface (52) is configured to receive a mechanical force for rotating the protection element (36).

3. The front pillar assembly (32) of claim 1 or 2, wherein the protection element (36) comprises a protection portion (48) and an actuation portion (50), wherein the protection portion (48) and the actuation portion (50) are arranged on opposite sides of the hinge point (46) and wherein the protection portion (48) is arranged closer to the first end (38) of the front pillar base (34) than the actuation portion (50).

4. The front pillar assembly (32) of claim 3, wherein the protection portion (48) is elongated and/or wherein the actuation portion (50) is elongated and/or wherein the protection portion (48) is at least three times longer than the actuation portion (50).

5. The front pillar assembly (32) of claim 2 and any one of claims 3 and 4, wherein the actuation interface (52) is arranged in the actuation portion (50).

6. The front pillar assembly (32) of any one of the preceding claims, wherein an angular difference (A) between the first angular position (44) and the second angular position (58) is 60° or less.

7. A protection system (18) for alleviating an impact of a road user on a vehicle (10), comprising
a front pillar assembly (32) according to any one of claims 1 to 6, and
an actuation means (54),
wherein the actuation means (54) is drivingly coupled to the protection element (36) such that the protection element (36) may be selectively caused to assume the second angular position (58) using the actuation means (54).

8. The protection system (18) of claim 7, further comprising a front lid (16), wherein the actuation means (54) comprises a portion (56) of the front lid (16).

9. The protection system (18) of claim 8, further comprising a front lid actuator (20) drivingly coupled to the front lid (16) and configured to move the front lid (16) from a retracted position (28) into an elevated position (30) for alleviating a road user impact on the front lid (16).

10. The protection system (18) of claim 9, wherein the actuation means (54) drivingly coupled to the protection element (36) comprises the front lid actuator (20).

11. The protection system (18) of any one of claims 7 to 10, wherein a portion of the protection element (36) is located under the front lid (16).

12. A method for operating a front pillar assembly (32), comprising
- causing a front lid (16) to move from a retracted position (28) into an elevated position (30), and
- causing a protection element (36) of the front pillar assembly (32) to move from a first angular position (44) relative to a front pillar base (34) in which the protection element (36) substantially extends along an outer contour (42) of the front pillar base (34) into a second angular position (58) relative to the front pillar base (34) in which the protection element (36) extends away from the front pillar base (34) using a portion (56) of the front lid (16).

13. A use of a portion (56) of a front lid (16) as an actuation means (54) for a protection element (36) of a front pillar assembly (32).

14. A vehicle (10) comprising a protection system (18) of any one of claims 7 to 11.
